Europäisches Patentamt

European Patent Office

Office européen des brevets

(19)

(11) EP 0 966 152 A2

(12) EUROPEAN PATENT APPLICATION

(43) Date of publication:
22.12.1999 Bulletin 1999/51

(51) Int Cl.$^6$: H04N 1/60

(21) Application number: 99304627.5

(22) Date of filing: 15.06.1999

(84) Designated Contracting States:
AT BE CH CY DE DK ES FI FR GB GR IE IT LI LU MC NL PT SE
Designated Extension States:
AL LT LV MK RO SI

(30) Priority: 16.06.1998 JP 16809398

(71) Applicants:
• KONICA CORPORATION
Tokyo (JP)
• Takei, Yutaka
Hino-shi, Tokyo (JP)

(72) Inventors:
• Haraguchi, Tsuyoshi
Hino-shi, Tokyo (JP)
• Takei, Yutaka
Hino-shi, Tokyo (JP)

(74) Representative: Nicholls, Michael John
J.A. KEMP & CO.
14, South Square
Gray's Inn
London WC1R 5LX (GB)

(54) Image processing method and apparatus

(57)    An image processing method and apparatus for obtaining R, G and B color output image informations from R, G and B color input image informations of an original image (11), wherein an input neutral color density and R, G and B input deviation densities are determined from the R, G and B color input image informations by using input operation device (131); an output neutral color density is determined from the input neutral color density determined by the input operation device (131), on the basis of neutral color density transformation informations by using neutral color density operation device (132); R, G and B output deviation densities are determined from the R, G and B input deviation densities determined by the input operation device (131), on the basis of deviation density transformation informations which are determined for each positive/negative combination of the R, G and B input deviation densities by using deviation density operation device (134); and the R, G and B color output image informations are obtained by using an output operation device (136) from the output neutral color densities determined by the neutral color density operation device (132) and the R, G and B output deviation densities determined by the deviation density operation device (134).

A storage medium which is stored with a program for executing on a computer the image processing method is provided.

FIG. 1

**Description**

The present invention relates to an image processing method, a storage medium and an image processing apparatus.

Heretofore, in order to reproduce an original image from R, G and B color output image informations of the original image, R, G and B color input image informations of the original image are transformed into chromaticity coordinates and then transformed the same into the R, G and B color output image informations.

However, this prior art performs the twice transformations and is troubled by a problem that an unnaturally reproduced image is formed. For example, an unnatural coloring is caused at some gradation portions of the neutral original image due to an error in the transformations. Another problem is that a large quantity of calculation is required for reproducing the original image.

In order to solve these problems, we have made a proposal in which the color output image informations are obtained by processing the color input image informations separately for the neutral color density and the deviation density, as disclosed in Japanese Patent Application Laid-Open No. 214794/97

According to this proposal, the original image can be preferably reproduced in a small quantity of calculation without no unnatural coloring.

However, this proposal may not obtain a satisfactory result.

When the transformation informations are set to adjust the red portion of a hard copy into a bluish color, for example, the yellow portion of the hard copy is also emphasized in the bluish color. This will be reasoned in the following. In order to form the red color in the hard copy, the R of the deviation density of the color output image informations is positive. In order to form the yellow color, however, the R and G of the deviation densities are positive. The R contains a positive deviation density so that the adjustment of the red color influences the yellow color.

Likewise, the adjustment of a color may influence another color containing the constituent of that color.

The present invention has an object to solve those problems and to provide an image processing method, a storage medium and an image processing apparatus which can preferably reproduce an original image from the R, G and B color input image informations of the original image with a reduced amount of calculations and which exerts no influence, when a color is to be adjusted, upon another color containing the constituent of that color.

According to the invention, there is provided an image processing method for obtaining R, G and B color output image informations from R, G and B color input image informations of an original image, which method comprises: determining an input neutral color density and R, G and B input deviation densities from the R, G and B color input image informations obtained from an original image;
determining an output neutral color density from the determined input neutral color density on the basis of neutral color density transformation informations; determining an output deviation density from the determined input deviation density on the basis of deviation density transformation informations which are determined for each positive/negative combination of the R, G and B input deviation densities; and obtaining the R, G and B color output image informations from the determined output neutral color density and the determined R, G and B output deviation densities.

In the method of this invention, the input deviation density in the color input image information of a portion of the neutral color in the original image is 0 so that the output deviation density transformed on the basis of the deviation density transformation information is also 0. As a result, the obtained color output image information has an amount to be reproduced into the neutral color so that the color output image information of the portion of the neutral color in the original image is not colored.

Since the input deviation density is a difference between the neutral color density and the color input image information of a portion having a chromatic color in the original image, on the other hand, the neutral color density is not changed by determining the output deviation density on the basis of the deviation density transformation information. By determining the output deviation density on the basis of the deviation density transformation information, therefore, a more preferable color can be reproduced on the color output image information of the portion of the chromatic color in the original image.

It is, therefore, possible to obtain the R, G and B color output image informations capable of preferably reproducing the original image, with a small quantity of calculation from the R, G and B color input image informations of the original image.

On the basis of the deviation density transformation information which is determined for each positive/negative combination (for each color of R, G, B, Y, M and C) of the R, G and B input deviation densities, on the other hand, the output deviation densities are determined from the input deviation densities. When a color is to be adjusted, therefore, no influence is exerted upon another color containing the constituent of that color so that the color can be independently controlled.

In the image processing method according to the invention, on the other hand, the deviation density transformation informations are so decided as can determine the output deviation density from the input deviation density, when a color is to be adjusted, without influencing another color containing the constituent of that color.

In the method of this invention, the deviation density transformation informations are so decided as can determine the output deviation density from the input deviation density, when a color is to be adjusted, without influencing another color containing the constituent of that color, so that no necessary color other than the adjusted one is made.

The invention also provides a computer program comprising program code means for executing the aforementioned image processing method on a computer, and a storage medium storing such a program.

In the method of this invention, the program for executing the image processing method is executed on the computer so that the R, G and B color output image informations capable of preferably reproducing the original image, with a small quantity of calculation from the R, G and B color input image informations of the original image. When a color is to be adjusted, on the other hand, no influence is exerted upon another color containing the constituent of that color so that the color can be independently controlled.

According to the invention, on the other hand, there is provided an image processing apparatus for obtaining R, G and B color output image informations from R, G and B color input image informations of an original image, which apparatus comprises: input operation means for determining an input neutral color density and R, G and B input deviation densities from the R, G and B color input image informations obtained from an original image; neutral color density operation means for determining an output neutral color density from the input neutral color density determined by said input operation means, on the basis of neutral color density transformation informations; deviation density operation means for determining R, G and B output deviation densities from the R, G and B input deviation density determined by said input operation means, on the basis of deviation density transformation informations which are determined for each positive/negative combination of the R, G and B input deviation densities; and output operation means for obtaining the R, G and B color output image informations from the output neutral color densities determined by said neutral color density operation means and the R, G and B output deviation densities determined by said deviation density operation means.

In the apparatus of this invention, the input deviation density in the color input image information of the portion having the neutral color in the original image is 0, and the output deviation density transformed on the basis of the deviation density transformation information is also 0. The obtained color output image information takes a quantity to be reproduced into a neutral color so that the color output image information of the portion in the neutral color of the original image is not colored.

Since the input deviation density is the difference of the neutral color density from the color input image information of the portion having a chromatic color in the original image, on the other hand, the neutral color density is not changed by determining the output deviation density on the basis of the deviation density transformation information. By determining the output deviation density on the basis of the deviation density transformation information, therefore, a more preferable color can be reproduced on the color output image information of the chromatic portion in the original image.

It is, therefore, possible to obtain the R, G and B color output image informations which can preferably reproduce the original image with a small quantity of calculation from the R, G and B color input image informations of the original image.

On the basis of the deviation density transformation informations which are determined for each positive/negative combination (R, G, B, Y, M and C colors) of the R, G and B input deviation densities, on the other hand, the output deviation densities are determined from the input deviation densities. When a color is to be adjusted, therefore, no influence is exerted upon another color containing the constituent of that color so that the color can be independently controlled.

In the image processing apparatus, according to the invention, on the other hand, the deviation density transformation informations are so decided as can determine the output deviation density from the input deviation density, when a desired color is to be adjusted, without influencing another color containing the constituent of the desired color.

In the apparatus of this invention, the deviation density transformation informations are so decided as can determine the output deviation density from the input deviation density, when a color is to be adjusted, without influencing another color containing the constituent of that color, so that no necessary color other than the adjusted one is made.

In order to simplify the description of the invention in the specification : a red color will be called "R"; a green color "G"; a blue color "B"; a yellow color "Y"; a magenta color "M"; and a cyan color "C". Likewise: a yellow dye will be called "Y dye"; a magenta dye "M dye"; and a cyan dye "C dye". Likewise, moreover: a yellow image made mainly of the Y dye will be called "Y image"; a magenta image made mainly of the M dye will be called "M image"; a cyan image made mainly of the C dye will be called "C image"; a neutral image in an achromatic color containing a mixture of the yellow dye, the magenta dye and the cyan dye will be called "N image"; a red image in a mixed color mainly of the yellow dye and the magenta dye will be called "R" image; a blue image in a mixed color mainly of the magenta dye and the cyan dye will be called "B image"; and a green image in a mixed color mainly of the cyan dye and the yellow dye will be called "G image".

It is preferable that the quantity of a X dye (here, X represents at least one of the Y, M and C) is not less than 80% ,more preferably, not less than 90% of the quantities of the total color dyes in the image. For example, in case of the yellow image consisting mainly of Y dye, it is preferable that the quantity of the Y dye is not less than 80%, more preferably, not less than 90% of the quantities of the total color dyes in the yellow image.

In case of the red image in a mixed color consisting mainly of the yellow dye and the magenta dye, it is preferable that the quantity of a color dye other than Y dye and M dye is not more than 20%, more preferably, not more than 10% of the quantities of the total color dyes in the red image. This is applicable to the other mixed color images.

On the other hand, the "input neutral color density" in the Specification means the neutral color density of the color input image information.

The "neutral color density" represents a mean value or a value near to the mean value of the densities of R, G and B of the neutral color. On the other hand, the "R, G and B input deviation densities" imply the deviation densities from the input neutral color densities of the color input image informations of the individual R, G and B primary colors.

The "output neutral color density" means the neutral color density of the color output image information. On the other hand, the "R, G and B output deviation densities" imply the deviation densities of the color output image informations of the individual R, G and B primary colors from the output neutral color densities.

Here, the "image information" may be usually called the image signals and means the information which expresses an images with signals. This image information is exemplified by a digital image information expressing the image with digital signals and by an analog image information expressing the image with analog signals.

The "deviation density transformation information" may be usually called the "color reproducing information" and determines the output deviation density from the input deviation density. Moreover, the "deviation density transformation information" is preferably a matrix information for matrix transformations and should not be limited thereto but may be exemplified by LUT data. On the other hand, the matrix is preferred to be a matrix of 3 x 3.

The "neutral color density transformation information" may be usually called "neutral color reproducing information" and determines the output neutral color density from the input neutral color density.

In the Specification, on the other hand, the following terminologies will have the following meanings.

The "original image" is an image for an origin for an image processing of the invention. The original image includes not only a photoelectrically readable image such as a color film, a color print or a printed matter but also video signals to be displayed on a monitor, or an electronic image such as a color digital image taken by a photography or a color analog signal image.

The "neutral" is an achromatic color or a color having a chromaticity of about 0.

The "color chip" is a standard sample for indicating a color and is usually stored with a plurality of color chip images. The "color chip image" is an image which is visibly stored in the color chip.

On the other hand, the "second color chip" is a duplicate of the color chip, which is reproduced on the basis of the information obtained by reading out the color chip. On the other hand, the "second color chip image" is an image which is visibly stored in the second color chip.

The "density" is a quantity indicating the shade.
The density is indicated in terms of shade, brightness, transmissivity or reflectivity. In the invention, on the other hand, the density is exemplified by a deviation density such as an input deviation density or an output deviation density, or a neutral color density such as an input neutral color density or an output neutral color density.

The "storage medium" is one for storing informations such as programs or data. Moreover, the storage medium is exemplified by a storage medium such as a magnetic storage medium including a photo mini disk, a floppy disk or a magnetic tape, an optical storage medium such as a CD-ROM, or a photo-electro-magnetic storage medium such as an MO disk, by a nonvolatile storage medium such as a RAM chip, an IC card or a ROM chip backed up by a battery, or by a volatile storage medium such as a RAM chip not backed up by a battery. On the other hand, the storage medium may be either an external storage medium or an internal storage medium. As this storage medium, on the other hand, a reloadable storage medium is preferred to an unreloadable storage medium because its setting can be easily changed.

The "hard copy" implies a storage type image, or an image recorded on the recording medium such as a film or a pager, as compared with a soft copy of a transient image such as an image to be displayed on a monitor. Moreover, that of hard copies, which is used for storing an image wherein a large area thereof is not occupied by a color of a density such as a photograph, is called the "pictorial hare copy".

Here in the invention, it is preferred for preferably reproducing the colors of an image that the deviation density transformation information or the neutral color density transformation information is determined by using the color chip image made of the same dyes as those of the hard copy or the original image.

It is more preferable that the color chip image is made of the same dyes as those of the original image and the hard copy.

In order to obtain a color input image information by reading out the color chip image or the second color chip image photoelectrically to determine the deviation density transformation information or the neutral color density transformation information, on the other hand, it is preferable to use either an image reading unit for metering the quantity of a reflected light in a predetermined wavelength range by a filter or an image reading unit for metering the quantity of a reflected light in a predetermined wavelength range by selecting a light source.

The image reading unit is a unit for reading out an image with a reflected light and is exemplified by a color image scanner having a linear image sensor for each of the B, G and R colors, as will be embodied in a first embodiment, by a color image scanner having a two-dimensional image sensor, or by a fixed digital camera. On the other hand, the image reading unit may be integrated with the image processing apparatus or the image forming unit.

The image forming unit may be exemplified not only by a unit for making by itself a hard copy such as a sublimation type thermosensible transfer printer, a melting type thermosensible transfer printer, an electrophotographic printer, an ink jet printer, a printing machine or a CRT printer processor but also by a plurality of units such as: a combination of a sublimation type thermosensible transfer color negative printer for preparing a color negative from input signals and a printer processor for making a hard copy from the prepared color negative; a combination of a CRT printer for printing an input image signal on a photosensitive sheet by using a CRT and an automatic developer for developing the photosensitive sheet; or a combination of a digital film recorder for printing an input image signal on a color negative film by using a negative writer having a CRT or a laser optical system, a film processor for developing the printed color negative film, and a printer process or for making a hard copy from the developed color negative film.

Although one specific example of the invention will be described as one embodiment, the invention should not be limited thereto. In the embodiment, on the other hand, there are decisive expressions, which enumerate preferred examples of the invention, so that they should not limit the technical scope of the invention and the meanings of the terms.

Fig. 1 is a functional block diagram schematically showing an image processing apparatus of a first embodiment according to the present invention;

Fig. 2 is a diagram showing an image reproducing system of the first embodiment;

Fig. 3 is a diagram showing a transformation information creating system of the first embodiment;

Fig. 4 is a flow chart for making a pictorial hard copy of the first embodiment;

Fig. 5 is a flow chart showing a behavior of the creation of a deviation density transformation information in the first embodiment; and

Fig. 6 is an explanatory diagram showing one example of a color chip in the first embodiment.

[1. Summary of System]

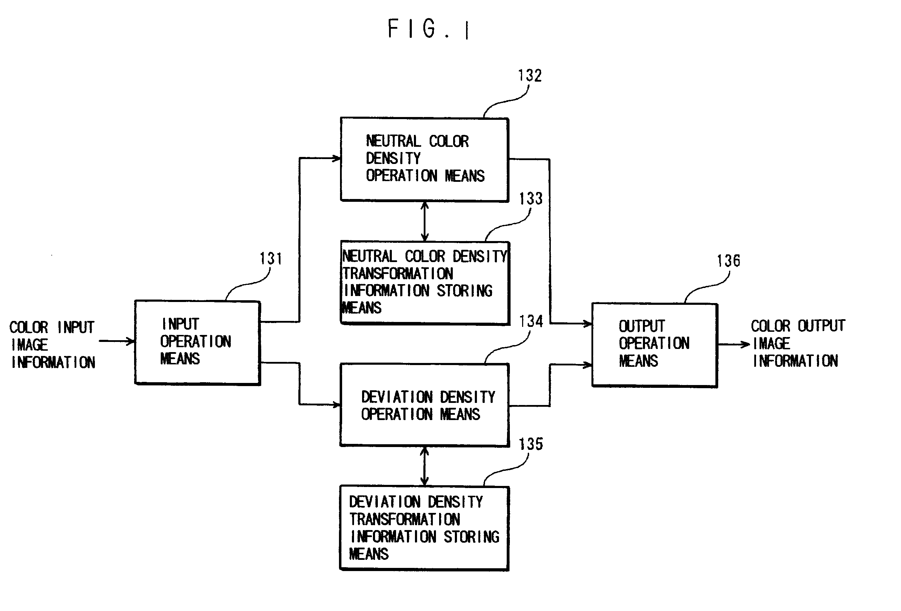

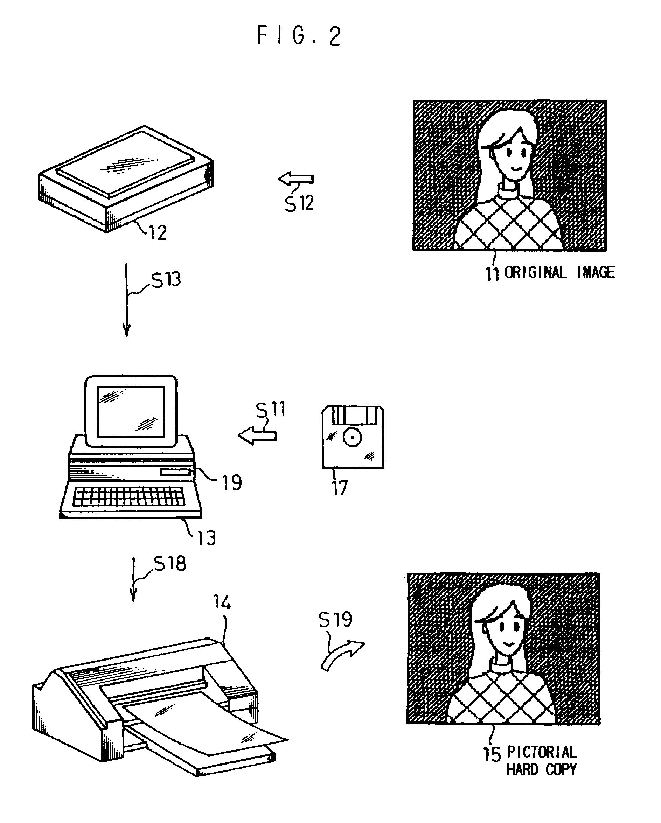

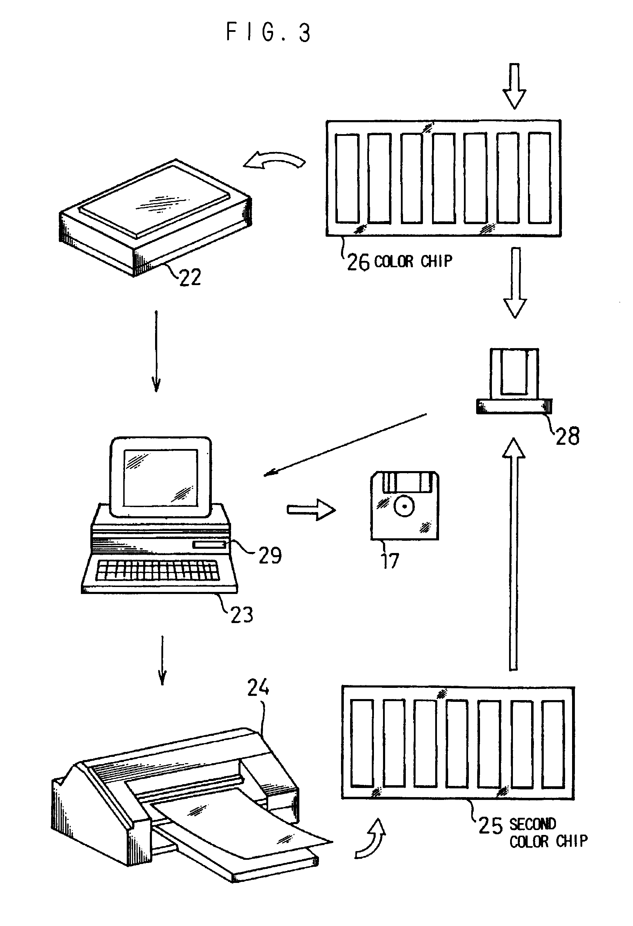

Fig. 1 is a block diagram schematically showing a processing block of an embodiment of the present invention; Fig. 2 is a schematic diagram showing an entire construction of an image reproducing system of the embodiment; and Fig. 3 is a schematic diagram showing a schematic construction of a transformation information creating system of the embodiment.

The entire construction will be described at first with reference to Figs. 2 and 3.

As shown in Fig. 2, in the image reproducing system a pictorial hard copy is made by reading out a reflected light from a color original image 11 to obtain a color input image information, and by obtaining a color output image information through an image processing from the color input image information.

The image reproducing system comprises: an image reading unit 12 for reading out the reflected light from the color original image 11 to obtain the color input image information; an image processing unit 13 for obtaining the color output image information by image-processing the color input image information; and an image forming unit 14 for making the pictorial hard copy from the color output image information.

The image reading unit 12 reads out the reflected light from the color original image 11 to obtain the color input image information indicating the reflectivities of the individual primary colors R, G and B of each pixel of the color original image. The image reading unit 12 fixes the color original image and is equipped with CCD linear image sensors each having 5,000 pixels for each colors of the R, G and B. These CCD linear image sensors are individually equipped with R, G and B filters on their incident sides.

On the other hand, the image reading unit 12 performs a main scanning with its CCD linear image sensors. The image reading unit 12 is equipped with an optical unit including those CCD linear image sensors, a linear light source and a diffusion box for diffusing a light coming from the linear light source. Moreover, the image reading unit 12 is a color image scanner for the sub-scanning operations by moving the optical unit in a direction vertical to the array direction of the CCDs.

As a result, the light emanating from the linear light source is turned through the diffusion box into a diffused light to illuminate the color original image. The light reflected from the illuminated color original image goes through the R, G and B filters into the CCD linear image sensors so that the individual reflectivities of the pixels can be obtained. The spectroscopic transmissivities of the R, G and B filters of the image reading unit are preferred to transmit no wavelength region other than those of the R, G and B.

Here, the color input image information (Ir) to be read out by the image reading unit 12 is determined from a reflectivity Rt (%) by the following formula for a reflectivity of 0 % at 0 and a reflectivity of 100 % at 255:

$$Ir = Rt \times (255/100).$$

Moreover, a storage medium reading unit 19 belonging to the image processing unit 13 reads out a deviation density transformation information and a neutral color density transformation information from a transformation information storage medium 17 which is stored with them.

The transformation information storage medium 17 is exemplified by a photo minidisk shown in Fig. 2. Naturally, the transformation information storage medium 17 should not be limited thereto but may be further exemplified by an external storage medium such as a floppy disk or an internal storage medium such as a memory or a ROM.

The image processing unit 13 uses the deviation density transformation information and the neutral color density transformation information, to determine the color output image information of the individual primary colors R, G and B from the color input image information obtained by the image reading unit 12. This image processing unit 13 outputs the color output image information to the image forming unit 14.

The image forming unit 14 can be exemplified by: a sublimation type thermosensible transfer printer for making a pictorial hard copy 15 by transferring an image thermally to a dedicated hard copy sheet of paper with sublimable dyes Y, M and C for three primary colors on the basis of the color output image information; an ink jet printer (e.g., MJC-700V2C (a product of Seiko Epson Corp.)) for making the pictorial hard copy 15 by transferring an image to a dedicated hard copy sheet of paper with inks Y, M, C and K (black) for four color primaries by the ink jet method on the basis of the color output image information; or a CRT printer (e.g., a printer for forming a hard copy by a developing treatment after an exposure) for exposing a color photosensitive sheet of paper or a color photographic photosensitive material on the basis of the color output image information.

On the other hand, Fig. 3 shows a transformation information creating system for determining the neutral color density transformation information and the deviation density transformation information to be used for determining the color output image information from the color input image information by the above-described image reproducing system, and for storing the determined neutral color density transformation information and deviation density transformation information in the transformation information storage medium 17.

Here, the neutral color density transformation information is a transformation information for determining output neutral color density from the input neutral color density obtained from the color input image information, and the deviation density transformation information is a transformation information for determining the output deviation density from the input deviation density obtained from the color input image information. The transformation information creating system includes: a calculating image reading unit 22 of the same kind as that of the image reading unit 12 of the image reproducing system; a calculating image forming unit 24 of the same kind of the image forming unit 14 of the image reproducing system; an image reading unit 28 for reading out the input image information to determine the density transformation information; a calculating image processing unit 23 belonging to the same kind as that of the image processing unit 13 of the image reproducing system and equipped with a storage medium writing unit 29 for storing the deviation density transformation information and the neutral density transformation information, as determined thereby, in the transformation information storage medium 17.

A color chip 26 is prepared at first. The color chip 26 of this embodiment is provided as its images with a Y image, an M image, a C image, an N image, an R image, a G image and a B image. These individual Y, M, C, N, R, G and B images are given such a predetermined area that the input image informations can be metered by the image reading unit. The color chip 26 is prepared to have the Y, M, C, N, R, G and B images having the same spectroscopic coloring characteristics as those of the original image 11 to be read out by the image reading unit. This preparation is preferable because it can best reproduce the image.

The image having the same spectroscopic coloring characteristics as those of the original image 11 represents an image similar substantially to the original image in the coloring characteristics (wave length) of each color dye of Y, M and C.

This color chip 26 may be prepared, for example, by an output unit for making the original image 11. When it is difficult to prepare the color chip 26 which has the same spectroscopic coloring characteristics as those of the original image 11 to be read by the image reading unit, the color chip 26 is preferably exemplified by a color print which has the Y, M, C, N, R, G and B images formed by exposing and developing a color photographic paper or a color negative photosensitive material of silver halide with the R, G, B, neutral, Y, M and C colors by a step tablet. This is because the color print to be obtained from the color photographic paper usually has less auxiliary absorbing components than those of other mediums.

Then, the image reading unit 28 meters the R, G and B input image informations of the color chip 26. This image reading unit 28 reads out a reflected light from the color chip 26 or a second color chip 25 to meter the color input image informations.

On the other hand, the calculating image reading unit 22 reads out reflected lights from the Y, M, C, N, R, G and B images of the color chip 26 to obtain the color input image informations relative to the reflectivities of the individual primary colors R, G and B of the individual images.

Moreover, the calculating image processing unit 23 employs the color input image information itself sent from the calculating image reading unit 22, as the color output image information. In other words, the color output image information is obtained without any image treatment on the color input image information.

Then, the calculating image forming unit 24 prepares the second color chip 25 from the color output image information sent from the calculating image processing unit 23.

The color input image information of R, G and B obtained from the color chip 26 by the image reading unit 28 is compared with the color input image information of R, G and B obtained from the second color chip 25 by the image reading unit 28. Then, the deviation density transformation information is determined by a method, as will be described under the title of [3. Creation of Deviation Density Transformation Information], and the neutral color density transformation information is determined by a method, as will be described under the title of [4. Creation of Neutral Color Density Transformation Information].

Then, the deviation density transformation information and the neutral color density transformation information, as determined by the storage medium writing unit 29 belonging to the calculating image processing unit 23, are stored in the transformation information storage medium 17.

The description of this embodiment is premised by the following fact. Since the transformation information creating system and the image reproducing system are separate systems but belong the same kind, the deviation density transformation information and the neutral color density transformation information are finely determined in advance by using the same image reproducing system as the aforementioned image reproducing system as the transformation information creating system and are stored in the transformation information storage medium 17, and this transformation information storage medium 17 is supplied to an image reproducing system of an end user or the like, so that the image is formed by the image reproducing system supplied with the transformation information storage medium 17.

In a factory or a sales agency, however, the image reproducing system itself may be used as a system for creating the transformation information to determine the deviation density transformation information and the neutral color density transformation information.

On the other hand, the deviation density transformation information and the neutral color density transformation information, as finely determined in advance by using either the image reproducing system or the transformation information creating system of the same kind as that of the image reproducing system, may be stored in the transformation information storage medium such as the ROM, so that the image reproducing system, which is provided with the transformation information storage medium stored with the deviation density transformation information and the neutral color density transformation information, may be supplied to the end user.

On the other hand, those deviation density transformation information and neutral color density transformation information may be supplied by communications through a network such as an internet or ordinary telephone lines from the image reproducing system of a domestic or foreign end user to the image reproducing system of a domestic or foreign end user.

On the other hand, the storage medium, which is stored with a program for creating the neutral color density transformation information and a program for creating the deviation density transformation information, may be supplied to the image reproducing system so that each end user may determine the deviation density transformation information and the neutral color density transformation information from the image reproducing system by setting the storage medium in the image reproducing system and by developing those programs from the storage medium.

On the other hand, the information such as the program for creasing the deviation density transformation information or the program for creasing the neutral color density transformation information may be supplied by communications through the network such as the internet or the ordinary telephone lines from the image reproducing system of a domestic or foreign end user to the image reproducing system of a domestic or foreign end user.

The neutral color density transformation information and the deviation density transformation information are preferably determined for each kind of the color input image information, that is, for each kind of the reading characteristics of the image reading unit and for each kind of the primary color dyes composing the original image. On the other hand, the neutral color density transformation information and the deviation density transformation information are preferably determined for each kind of the color output image information, that is, for each kind of the output characteristics of the image forming unit and for each kind of the hard copies, as determined by the kinds of hard copy color dyes or hard copy materials such as hard copy recording sheets of paper.

If the original image is restricted to a color photographic print of silver halide, on the other hand, the spectroscopic coloring characteristics are not seriously different depending on the printing color photographic photosensitive materials of silver halide. Nor is seriously different the color reproduction depending on the reading characteristics of the image reading unit, even if the transformation method is fixed. In order to simplify the description, therefore, the following method of creating the neutral color density transformation information and the deviation density transformation information will be described on the case in which the original image is a color photographic print of silver halide.

[2. Creation of Pictorial Hard Copy of Image Reproducing System]

Here will be detailed how to make the pictorial hard copy of the present image reproducing system.

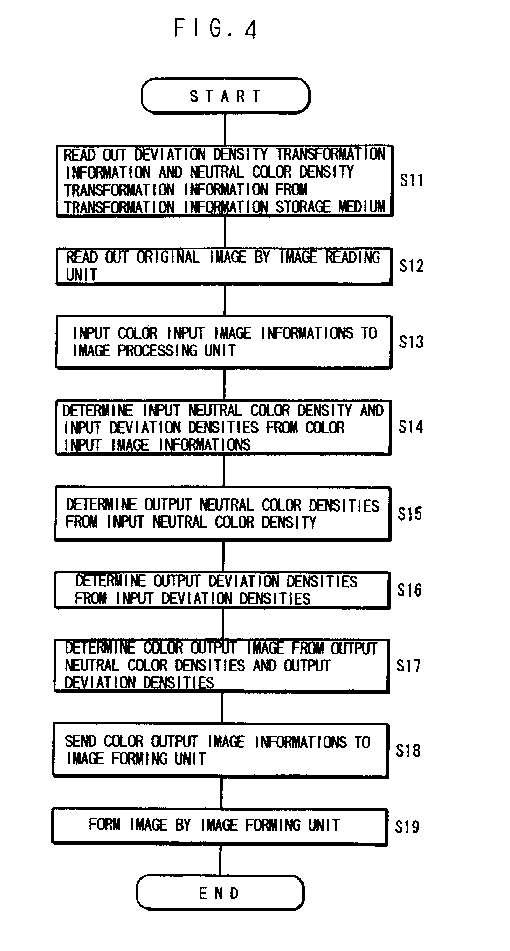

References will be made to Fig. 1 presenting a block diagram schematically showing a processing block of the image processing apparatus of the invention and to Fig. 4 presenting a flow chart showing a procedure for making the pictorial hard copy.

First of all, the storage medium reading unit 19 of the image processing unit 13 reads out (at S11 of Fig. 4) the deviation density transformation information and the neutral color density transformation information for determining the color output image information from the color input image information, from the transformation information storage medium 17 stored therein the deviation density transformation information and the neutral color density transformation information.

Here, the deviation density transformation information thus read is stored in neutral color density transformation information storing means 133. On the other hand, the neutral color density transformation information thus read is stored in deviation density transformation information storing means 135. Here, the neutral color density transformation information storing means 133 and the deviation density transformation information storing means 135 are formed in predetermined regions of the memories belonging to the image processing unit 13.

Next, the image reading unit 12 reads out the original image 11 (at S12 of Fig. 4) to obtain the color input image informations (IRxy, IGxy and Ibxy) with respect to the reflectivities of the R, G and B of each pixel, wherein x designates a position of each pixel in the X direction, and y designates a position of each pixel in the Y direction of the original image 11.

Here, the informations IRxy, IGxy and IBxy mean the input image informations of the R, G and B of the pixel which has the position x in the X direction and the position y in the Y direction of the read original image. It is needless to say that the color input image informations (IRxy, IGxy and IBxy) with respect to the reflectivities of the R, G and B are adjusted in their photometries to give IRxy = IGxy = IBxy = 255 for 100 % of all the reflectivities of the R, G and B.

Next, the color input image informations (IRxy, IGxy and IBxy) of each pixel (xy) of the R, G and B of the original image 11, as obtained by the image reading unit 12, are inputted (at S13 of Fig. 14) to the image processing unit 13 through a data interface.

Next, input operation means 131 of the image processing unit 13 determines (at S14 of Fig. 4), from the following Formula (1), the neutral color density (as may be called an input neutral color density INxy in the following) of each pixel (xy) of the color input image information from the color input image informations (IRxy, IGxy and IBxy) with respect to the reflectivities of the R, G and B of each pixel (xy) of the color input image information obtained by the image reading unit 12.

$$INxy = \alpha R \times IRxy + \alpha G \times IGxy + \alpha B \times IBxy, \tag{1}$$

wherein $\alpha R$, $\alpha G$ and $\alpha B$ designate coefficients which are determined depending on the color input image informations by the well-known method.

On the other hand, the input operation means 131 determines (at S14 of Fig. 4) input deviation densities ($\Delta IRxy$, $\Delta IGxy$, $\Delta IBxy$) from the neutral color densities of the individual primary color densities of the R, G and B, from the following Formulas (2):

$$\Delta IRxy = IRxy - INxy;$$

$$\Delta IGxy = IGxy - INxy; \tag{2}$$

and

$$\Delta IBxy = IBxy - INxy.$$

Here, these can be calculated by the matrix.

Next, neutral color density operation means 132 of the image processing unit 13 transforms (at S15 of Fig. 4) the input neutral color density (INxy) into output neutral color densities (PNBxy, PNGxy, PNRxy) of each pixel (xy) by the neutral color density transforming function, as expressed by the following Formulas (3), on the basis of the neutral color density transformation informations which are stored in a neutral color density transformation information storing means 133:

$$PNRxy = \alpha NR \times INxy;$$

$$PNGxy = \alpha NG \times INxy; \tag{3}$$

and

$$PNBxy = \alpha NB \times INxy.$$

Here, it is needless to say that the image forming unit 14 obtains a hard copy while it is normally set in the image forming unit by the setting method.

Next, deviation density operation means 134 of the image processing unit 13 transforms (at S16 of Fig. 4) the input deviation densities ($\Delta IRxy$, $\Delta IGxy$, $\Delta IBxy$) into output deviation densities ($\Delta PRxy$, $\Delta PGxy$, $\Delta PBxy$) of each pixel (xy) by the deviation density transformation function, as expressed by the following Formula (4), on the basis of the deviation density transformation information stored in the deviation density transformation information storing means 135:

$$(\Delta PRxy, \Delta PGxy, \Delta PBxy)$$

$$= Fk(\Delta IRxy, \Delta IGxy, \Delta IBxy), \tag{4}$$

wherein Fk( ) designates a color reproduction transformation function indicated by the deviation density transformation information.

Here, the color reproduction transformation function which is featured by a simple calculation and by an excellent color reproduction is preferably exemplified by the following matrix transformation, as will be described in the following equation 1:

[Equation 1]

$$\begin{vmatrix} \Delta PRxy \\ \Delta PGxy \\ \Delta PBxy \end{vmatrix} = \begin{vmatrix} A11 & A12 & A13 \\ A21 & A22 & A23 \\ A31 & A32 & A33 \end{vmatrix} \begin{vmatrix} \Delta IBxy \\ \Delta IGxy \\ \Delta IRxy \end{vmatrix}$$

Here, coefficients A11 to A33 are determined in the following manner. The deviation density transformation informations are determined in the following six manners for each positive/negative combination of the input deviation densities of the R, G and B:

$\Delta IRxy \geq 0$, $\Delta IGxy \leq 0$, and $\Delta IBxy \leq 0$
(for the R color):
A11 = R$\alpha$11, A21 = R$\alpha$21, and A31 = R$\alpha$31;
A12 = R$\alpha$12, A22 = R$\alpha$22, and A32 = R$\alpha$32;
and

A13 = Rα13, A23 = Rα23, and A33 = Rα33:
ΔIRxy ≤ 0, ΔIGxy ≥ 0, and ΔIBXy ≦ 0
(for the G color):
A11 = Gα11, A21 = Gα21, and A31 = Gα31;
A12 = Gα12, A22 = Gα22, and A32 = Gα32;
and
A13 = Gα13, A23 = Gα23, and A33 = Gα33:
ΔIRxy ≤ 0, ΔIGxy ≤ 0, and ΔIBxy ≥ 0
(for the B color):
A11 = Bα11, A21 = Bα21, and A31 = Bα31;
A12 = Bα12, A22 = Bα22, and A32 = Bα32;
and
A13 = Bα13, A23 = Bα23, and A33 = Bα33:
ΔIRxy ≤ 0, ΔIGxy ≥ 0, and ΔIBxy ≥ 0
(for the C color):
A11 = Cα11, A21 = Cα21, and A31 = Cα31;
A12 = Cα12, A22 = Cα22, and A32 = Cα32;
and
A13 = Cα13, A23 = Cα23, and A33 = Cα33:
ΔIRxy ≥ 0, ΔIGxy ≤ 0, and ΔIBxy ≥ 0
(for the M color):
All = Mα11, A21 = Mα21, and A31 = Mα31;
A12 = Mα12, A22 = Mα2, and A32 = Mα32;
and
A13 = Mα13, A23 = Mα23, and A33 = Mα33:
and
ΔIRxy ≥ 0, ΔIGxy ≥ 0, and ΔIBxy ≤ 0
(for the Y color):
A11 = Yα11, A21 = Yα21, and A31 = Yα31;
A12 = Yα12, A22 = Yα22, and A32 = Yα32;
and
A13 = Yα13, A23 = Yα23, and A33 = Yα33.

Here will be described the individual effects for Rα11 to Rα33, Gα11 to Gα33, Bα11 to Bα33, Cα11 to Cα33, Mα11 to Mα33 and Yα11 to Yα33.

If the color input image information obtained by reading out the original image by the image reading unit 12 is used as it is as the color output image information, Rα11 > 1 when the chroma of the R color of the hard copy made by the image forming unit is reproduced low, so that the chroma of the R color is raised clear. If the color input image information obtained by reading out the original image by the image reading unit 12 is used as it is as the color output image information, on the contrary, Rall < 1 when the chroma of the R color of the hard copy made by the image forming unit is reproduced high, so that the chroma of the R color is lowered unclear.

If the color input image information obtained by reading out the original image by the image reading unit 12 is used as it is as the color output image information, Rα21 > 0 when the R color of the hard copy made by the image forming unit is reproduced in the R color tinged with the M color, so that the R color is reproduced in the R color tinged with the G color. If the color input image information obtained by reading out the original image by the image reading unit 12 is used as it is as the color output image information, on the contrary, Rα21 < 0 when the R color of the hard copy made by the image forming unit is reproduced in the R color tinged with the G color, so that the R color is reproduced in the R color tinged with the M color.

If the color input image information obtained by reading out the original image by the image reading unit 12 is used as it is as the color output image information, Rα31 > 0 when the R color of the hard copy made by the image forming unit is reproduced in the R color tinged with the Y color, so that the R color is reproduced in the R color tinged with the B color. If the color input image information obtained by reading out the original image by the image reading unit 12 is used as it is as the color output image information, on the contrary, Rα31 < 0 when the R color of the hard copy made by the image forming unit is reproduced in the R color tinged with the B color, so that the R color is reproduced in the R color tinged with the Y color.

If the color input image information obtained by reading out the original image by the image reading unit 12 is used as it is as the color output image information, Gα12 > 0 when the G color of the hard copy made by the image forming unit is reproduced in the G color tinged with the C color, so that the G color is reproduced in the G color tinged with the R color. If the color input image information obtained by reading out the original image by the image reading unit 12 is used as it is as the color output image information, on the contrary, $G\alpha12 < 0$ when the G color of the hard copy made by the image forming unit is reproduced in the G color tinged with the R color, so that the G color is reproduced in the G color tinged with the C color.

If the color input image information obtained by reading out the original image by the image reading unit 12 is used as it is as the color output image information, $G\alpha22 > 1$ when the chroma of the G color of the hard copy made by the image forming unit is reproduced low, so that the chroma of the G color is raised clear. If the color input image information obtained by reading out the original image by the image reading unit 12 is used as it is as the color output image information, on the contrary, $G\alpha22 < 1$ when the chroma of the G color of the hard copy made by the image forming unit is reproduced high, so that the chroma of the G color is lowered unclear.

If the color input image information obtained by reading out the original image by the image reading unit 12 is used as it is as the color output image information, $G\alpha32 > 0$ when the G color of the hard copy made by the image forming unit is reproduced in the G color tinged with the Y color, so that the G color is reproduced in the G color tinged with the B color. If the color input image information obtained by reading out the original image by the image reading unit 12 is used as it is as the color output image information, on the contrary, $G\alpha32 < 0$ when the G color of the hard copy made by the image forming unit is reproduced in the G color tinged with the B color, so that the G color is reproduced in the G color tinged with the Y color.

If the color input image information obtained by reading out the original image by the image reading unit 12 is used as it is as the color output image information, $B\alpha13 > 0$ when the B color of the hard copy made by the image forming unit is reproduced in the B color tinged with the C color, so that the B color is reproduced in the B color tinged with the R color. If the color input image information obtained by reading out the original image by the image reading unit 12 is used as it is as the color output image information, on the contrary, $B\alpha13 < 0$ when the B color of the hard copy made by the image forming unit is reproduced in the B color tinged with the R color, so that the B color is reproduced in the B color tinged with the C color.

If the color input image information obtained by reading out the original image by the image reading unit 12 is used as it is as the color output image information, $B\alpha23 > 0$ when the B color of the hard copy made by the image forming unit is reproduced in the B color tinged with the M color, so that the B color is reproduced in the B color tinged with the G color. If the color input image information obtained by reading out the original image by the image reading unit 12 is used as it is as the color output image information, on the contrary, $B\alpha23 < 0$ when the B color of the hard copy made by the image forming unit is reproduced in the B color tinged with the G color, so that the B color is reproduced in the B color tinged with the M color.

If the color input image information obtained by reading out the original image by the image reading unit 12 is used as it is as the color output image information, $B\alpha33 > 1$ when the chroma of the B color of the hard copy made by the image forming unit is reproduced low, so that the chroma of the B color is raised clear. If the color input image information obtained by reading out the original image by the image reading unit 12 is used as it is as the color output image information, on the contrary, $B\alpha33 < 1$ when the chroma of the B color of the hard copy made by the image forming unit is reproduced high, so that the chroma of the B color is lowered unclear.

If the color input image information obtained by reading out the original image by the image reading unit 12 is used as it is as the color output image information, $C\alpha11 < 1$ when the chroma of the C color of the hard copy made by the image forming unit is reproduced high, so that the chroma of the C color is lowered unclear. If the color input image information obtained by reading out the original image by the image reading unit 12 is used as it is as the color output image information, on the contrary, $C\alpha11 > 1$ when the chroma of the C color of the hard copy made by the image forming unit is reproduced low, so that the chroma of the C color is raised clear.

If the color input image information obtained by reading out the original image by the image reading unit 12 is used as it is as the color output image information, $C\alpha21 > 0$ when the C color of the hard copy made by the image forming unit is reproduced in the C color tinged with the G color, so that the C color is reproduced in the C color tinged with the M color. If the color input image information obtained by reading out the original image by the image reading unit 12 is used as it is as the color output image information, on the contrary, $C\alpha21 < 0$ when the C color of the hard copy made by the image forming unit is reproduced in the C color tinged with the M color, so that the C color is reproduced in the C color tinged with the G color.

If the color input image information obtained by reading out the original image by the image reading unit 12 is used as it is as the color output image information, $C\alpha31 > 0$ when the C color of the hard copy made by the image forming unit is reproduced in the C color tinged with the B color, so that the C color is reproduced in the C color tinged with the Y color. If the color input image information obtained by reading out the original image by the image reading unit 12 is used as it is as the color output image information, on the contrary, $C\alpha31 < 0$ when the C color of the hard copy made by the image forming unit is reproduced in the C color tinged with the Y color, so that the C color is reproduced in the C color tinged with the B color.

If the color input image information obtained by reading out the original image by the image reading unit 12 is used as it is as the color output image information, $M\alpha12 > 0$ when the M color of the hard copy made by the image forming unit is reproduced in the M color tinged with the R color, so that the M color is reproduced in the M color tinged with the C color. If the color input image information obtained by reading out the original image by the image reading unit 12 is used as it is as the color output image information, on the contrary, $M\alpha12 < 0$ when the M color of the hard copy made by the image forming unit is reproduced in the M color tinged with the C color, so that the M color is reproduced in the M color tinged with the R color.

If the color input image information obtained by reading out the original image by the image reading unit 12 is used as it is as the color output image information, $M\alpha22 < 1$ when the chroma of the M color of the hard copy made by the image forming unit is reproduced high, so that the chroma of the M color is lowered unclear. If the color input image information obtained by reading out the original image by the image reading unit 12 is used as it is as the color output image information, on the contrary, $M\alpha22 > 1$ when the chroma of the M color of the hard copy made by the image forming unit is reproduced low, so that the chroma of the M color is raised clear.

If the color input image information obtained by reading out the original image by the image reading unit 12 is used as it is as the color output image information, $M\alpha32 > 0$ when the M color of the hard copy made by the image forming unit is reproduced in the M color tinged with the B color, so that the M color is reproduced in the M color tinged with the Y color. If the color input image information obtained by reading out the original image by the image reading unit 12 is used as it is as the color output image information, on the contrary, $M\alpha32 < 0$ when the M color of the hard copy made by the image forming unit is reproduced in the M color tinged with the Y color, so that the M color is reproduced in the M color tinged with the B color.

If the color input image information obtained by reading out the original image by the image reading unit 12 is used as it is as the color output image information, $Y\alpha13 > 0$ when the Y color of the hard copy made by the image forming unit is reproduced in the Y color tinged with the R color, so that the Y color is reproduced in the Y color tinged with the C color. If the color input image information obtained by reading out the original image by the image reading unit 12 is used as it is as the color output image information, on the contrary, $Y\alpha13 < 0$ when the Y color of the hard copy made by the image forming unit is reproduced in the Y color tinged with the C color, so that the Y color is reproduced in the Y color tinged with the R color.

If the color input image information obtained by reading out the original image by the image reading unit 12 is used as it is as the color output image information, $Y\alpha23 > 0$ when the Y color of the hard copy made by the image forming unit is reproduced in the Y color tinged with the G color, so that the Y color is reproduced in the Y color tinged with the M color. If the color input image information obtained by reading out the original image by the image reading unit 12 is used as it is as the color output image information, on the contrary, $Y\alpha23 < 0$ when the Y color of the hard copy made by the image forming unit is reproduced in the Y color tinged with the M color, so that the Y color is reproduced in the Y color tinged with the G color.

If the color input image information obtained by reading out the original image by the image reading unit 12 is used as it is as the color output image information, $Y\alpha33 < 1$ when the chroma of the Y color of the hard copy made by the image forming unit is reproduced high, so that the chroma of the Y color is lowered unclear. If the color input image information obtained by reading out the original image by the image reading unit 12 is used as it is as the color output image information, on the contrary, $Y\alpha33 > 1$ when the chroma of the Y color of the hard copy made by the image forming unit is reproduced low, so that the chroma of the Y color is raised clear.

Then, output operation means 136 of the image processing unit 13 determines (at S17 of Fig. 4) a color output image (PRxy, PGxy, PBxy) of each pixel (xy) by the following Formulas (5) from the output neutral color densities (PNRxy, PNGxy, PNBxy) and the output deviation densities ($\Delta$PRxy, $\Delta$PGxy, $\Delta$PBxy) of each pixel (xy):

$$PRxy = \Delta PRxy + PNRxy$$

$$PGxy = \Delta PGxy + PNGxy; \qquad (5)$$

and

$$PBxy = \Delta PBxy + PNBxy.$$

Next, the image processing unit 13 obtains the color output image by transforming the color output image (PRxy, PGxy, PBxy) of each obtained pixel (xy) into the format of the image forming unit 14, and sends (at S18 of Fig. 4) to image forming unit 14.

On the basis of the color output image information, the image forming unit 14 forms the pictorial hard copy 15 (at S19 of Fig. 4).

[3. Creation of Deviation Density Transformation Information]

A method for determining the deviation density transformation information will be described in detail on the image reproducing system for making a hard copy from a color print, which is obtained by exposing and developing a color photosensitive sheet of paper of a color negative photosensitive material of silver halide, by means of a CRT printer and a developing unit.

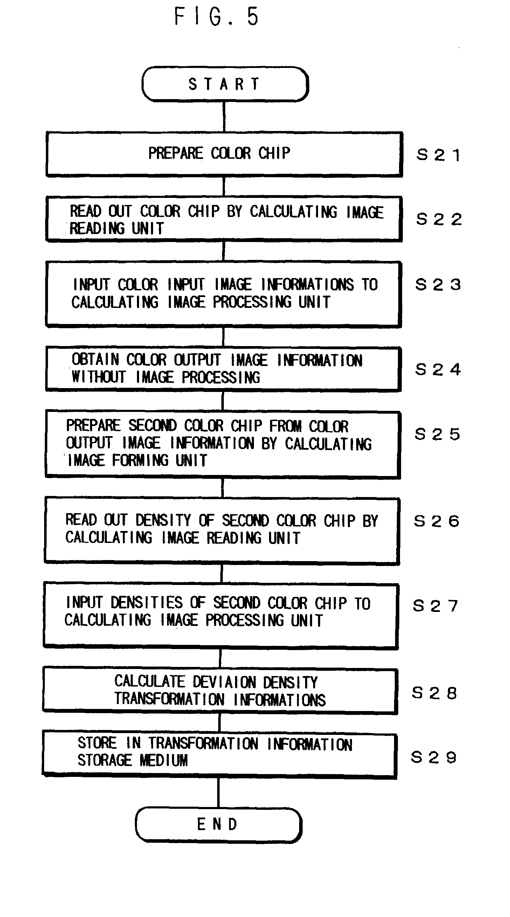

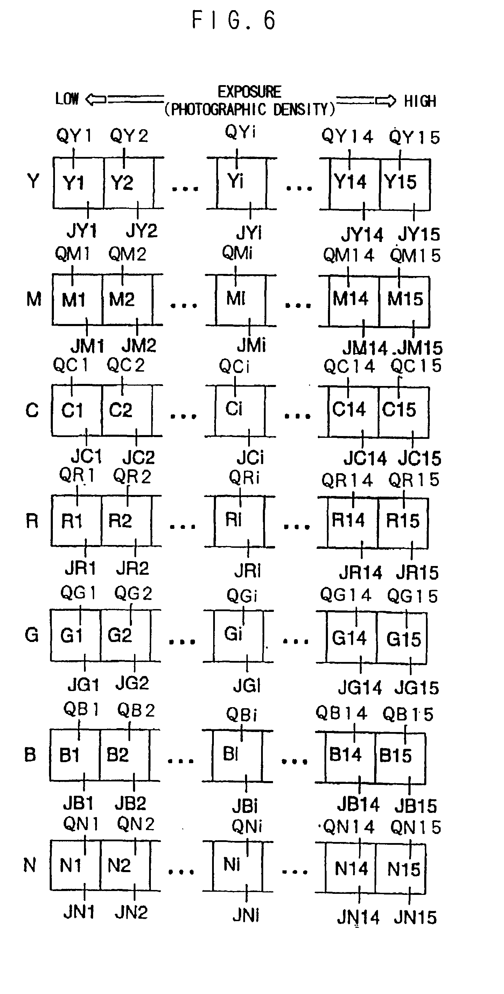

Fig. 5 is a flow chart for creating the deviation density transformation information. First of all, at S21 of Fig. 5, for example, the color chip 26 of the color photosensitive sheet (of negative/positive type), which has an image of fifteen grades of brightness (or fifteen grades of density) shown in Fig. 6, is prepared.

For this preparation, there is determined at first such a relation among the exposures of the R, G and B as to make an N image in an achromatic color. In order to make the N image achromatic, the photosensitive sheet is exposed in an exposure of logE at an increasing rate of 0.05 and is developed to prepare the color chip 26 which has: an N image (Ni: i = 1 to 15) of 15 grades of brightness (or 15 grades of density); a B image (Bi: i = 1 to 15) of 15 grades of brightness (or 15 grades of density); a G image (Gi: i = 1 to 15) of 15 grades of brightness (or 15 grades of density); an R image (Ri: i = 1 to 15) of 15 grades of brightness (or 15 grades of density); a Y image (Yi: i = 1 to 15) of 15 grades of brightness (or 15 grades of density); an M image Mi: i = 1 to 15) of 15 grades of brightness (or 15 grades of density): and a C image (Ci: i = 1 to 15) of 15 grades of brightness (or 15 grades of density).

Here: the Y image is obtained exclusively by the exposure in the B primary color; the M image is obtained exclusively by the exposure in the G primary color; and the C image is obtained exclusively by the exposure in the R primary color. Moreover, the exposures of the Y, M and C images at each brightness grade (or density grade) are equal to the exposures of the individual primary colors R, G and B of the N image. At each brightness grade (or density grade), therefore, the amounts of dyes of the Y, M and C images are equal to those of the individual colors of the Y, M and C dyes of the N image.

On the other hand: the R image is obtained exclusively by the exposures in the G primary color and the B primary color; the G image is obtained exclusively by the exposures in the R primary color and the B primary color; and the B image is obtained exclusively by the exposures in the R primary color and the G primary color. Moreover, the exposures of the individual primary colors R, G and B of the R, G and B images at each brightness grade (or density grade) are equal, excepting that of the unexposed primary color, to those of the individual primary colors R, G and B of said N image. At each brightness grade (or density grade), therefore, the amounts of dyes of the individual colors of the Y, M and C dyes of the R, G and B images are equal, excepting those of the complementary dyes, to those of the individual colors of the Y, M and C dyes of said N image.

Therefore: the Y, R, G and N images of the corresponding brightness grade (or density grade) are equal in the amounts of the Y dye; the M, R, B and N images of the corresponding brightness grade (or density grade) are equal in the amounts of the M dye; and the C, G, B and N images of the corresponding brightness grade (or density grade) are equal in the amounts of the C dye.

Here, each of the 15 grades of density is indicated by a mantissa i, and the mantissa i of the grade of the minimum exposure is set to 1. From now on, more specifically, the mantissa i is enlarged the more for the higher exposure, i.e., for the lower brightness because the color chip of this example is made of a negative photosensitive material (in short, the mantissa i is the larger for the higher density). From now on, on the other hand, when the Y, M, C, R, G, B and N images are to be indicated, they are designated by Y, M, C, R, G, B and N, respectively, and these images are symbolically designated a tentative letter k. Here, letters J** and Q** appearing in Fig. 6 are symbols to be used in the description to be made hereinafter.

Next, at S22 of Fig. 5, the calculating image reading unit 22 reads out the Y image (Yi: i = 1 to 15), the M image (Mi: i = 1 to 15), the C image (Ci: i = 1 to 15), the R image (Ri: i = 1 to 15), the G image (Gi: i = 1 to 15), the B image (Bi: i = 1 to 15) and the N image (Ni: i = 1 to 15) at the each grade of the color chip 26 to obtain the color input image informations (JRki, JGki and JBki: k = Y, M, C, R, G, B and N, and i = 1 to 15) of those images in the primary colors R, G and B. Here in Fig. 6, the JRki, JGki and JBki will be indicated as a whole by Jki (k = Y, M, C, R, G, B and N, and i = 1 to 15).

Next, at S23 of Fig. 5, the color input image informations (JRki, JGki and JBki: k = Y, M, C, R, G, B and N, and i = 1 to 15) in the primary colors R, G and B of the Y image (Yi: i = 1 to 15), the M image (Mi: i = 1 to 15), the C image (Ci: i = 1 to 15), the R image (Ri: i = 1 to 15), the G image (Gi: i = 1 to 15), the B image (Bi: i = 1 to 15) and the N image (Ni: i = 1 to 15) of the color chip 26, as obtained by the calculating image reading unit 22, are inputted to the calculating image processing unit 23 through the data interface.

Next, at S24 of Fig. 5, the calculating image processing unit 23 transforms the color input image information inputted, as it is, into the color output image information. In other words, the color input image information is transformed into the color output image information without any image processing. Moreover, the color output image information thus obtained is outputted through the data interface to the calculating image forming unit 24.

Next, at S25 of Fig. 5, the calculating image forming unit 24 prepares the second color chip 25, as shown in Fig. 6, from the color output image information sent from the calculating image processing unit 23.

Next, at S26 of Fig. 5, the input image informations of the R, G and B of each image of the second color chip 25 is read out as at S22 of Fig. 5 by the calculating image reading unit 22. Here: the input image information of the read Y image (Yi: i = 1 to 15) will be called QRYi, QGYi and QBYi (i = 1 to 15); the input image information of the read M image (Mi: i = 1 to 15) will be called QRMi, QGMi and QBMi (i = 1 to 15); the input image information of the read C image (Ci: i = 1 to 15) will be called QRCi, QGCi and QBCi (i = 1 to 15); the input image information of the read R image (Ri: i = 1 to 15) will be called QRRi, QGRi and QBRi (i = 1 to 15); the input image information of the read G image (Gi: i = 1 to 15) will be called QRGi, QGGi and QBGi (i = 1 to 15); the input image information of the read B image (Bi: i = 1 to 15) will be called QRBi, QGBi and QBBi (i = 1 to 15); and the input image information of the read N image (Ni: i = 1 to 15) will be called QRNi, QGNi and QBNi (i = 1 to 15). Here in Fig. 6, QRki, QGki and QBki will be indicated as a whole as Qki (k = Y, M, C, R, G, B and N).

Next, at S27 of Fig. 5, the input image informations of each image of the second color chip 25, as obtained by the calculating image reading unit 22, are inputted to the calculating image processing unit 23 through the data interface.

Next, at S28 of Fig. 5, the calculating image processing unit 23 determines the deviation density transformation informations or coefficients $R\alpha11$ to $R\alpha33$, $G\alpha11$ to $G\alpha33$, $B\alpha11$ to $B\alpha33$, $C\alpha11$ to $C\alpha33$, $M\alpha11$ to $M\alpha33$ and $Y\alpha11$ to $Y\alpha33$ from the following equations 2 to 7 :

[Equation 2]

R Color Density Transformation Information

$$(\Delta IR \times y \geqq 0, \Delta IG \times y \leqq 0, \Delta IB \times y \leqq 0)$$

$$R\alpha11 = \sum_{i=1}^{15} \left( \frac{JRRi - (JRRi + JGRi + JBRi)/3}{QRRi - (QRRi + QGRi + QBRi)/3} \right) \div 15$$

$$R\alpha22 = \sum_{i=1}^{15} \left( \frac{JRRi - (JRRi + JGRi + JBRi)/3}{QRRi - (QRRi + QGRi + QBRi)/3} \right) \div 15$$

$$R\alpha33 = \sum_{i=1}^{15} \left( \frac{JRRi - (JRRi + JGRi + JBRi)/3}{QRRi - (QRRi + QGRi + QBRi)/3} \right) \div 15$$

$$R\alpha21 = \sum_{i=1}^{15} \left( \frac{[JGRi - (JRRi + JGRi + JBRi)/3] - [QGRi - (QRRi + QGRi + QBRi)/3] \times R\alpha22}{QRRi - (QRRi + QGRi + QBRi)/3} \right) \div 15$$

$$R\alpha31 = \sum_{i=1}^{15} \left[ \frac{[JBRi-(JRRi+JGRi+JBRi)/3]-[QBRi-(QRRi+QGRi+QBRi)/3] \times R\alpha33}{QRRi-(QRRi+QGRi+QBRi)/3} \right] \div 15$$

R$\alpha$12=0
R$\alpha$32=0
R$\alpha$13=0
R$\alpha$23=0

[Equation 3]

G Color Density Transformation Information

$$(\Delta IR \times y \leq 0, \Delta IG \times y \geq 0, \Delta IB \times y \leq 0)$$

$$G\alpha11 = \sum_{i=1}^{15} \left[ \frac{JGGi-(JRGi+JGGi+JBGi)/3}{QGGi-(QRGi+QGGi+QBGi)/3} \right] \div 15$$

$$G\alpha22 = \sum_{i=1}^{15} \left[ \frac{JGGi-(JRGi+JGGi+JBGi)/3}{QGGi-(QRGi+QGGi+QBGi)/3} \right] \div 15$$

$$G\alpha33 = \sum_{i=1}^{15} \left[ \frac{JGGi-(JRGi+JGGi+JBGi)/3}{QGGi-(QRGi+QGGi+QBGi)/3} \right] \div 15$$

$$G\alpha12 = \sum_{i=1}^{15} \left[ \frac{[JRGi-(JRGi+JGGi+JBGi)/3]-[QRGi-(QRGi+QGGi+QBGi)/3] \times G\alpha11}{QGGi-(QRGi+QGGi+QBGi)/3} \right] \div 15$$

$$G\alpha32 = \sum_{i=1}^{15} \left[ \frac{[JBGi-(JRGi+JGGi+JBGi)/3]-[QBGi-(QRGi+QGGi+QBGi)/3] \times G\alpha33}{QGGi-(QRGi+QGGi+QBGi)/3} \right] \div 15$$

G$\alpha$21=0
G$\alpha$31=0

Gα13=0
Gα23=0

[Equation 4]

B Color Density Transformation Information

$$(\Delta IR \times y \leqq 0,\ \Delta IG \times y \leqq 0,\ \Delta IB \times y \geqq 0)$$

$$B\alpha 11 = \sum_{i=1}^{15} \left[ \frac{JBBi-(JRBi+JGBi+JBBi)/3}{QBBi-(QRBi+QGBi+QBBi)/3} \right] \div 15$$

$$B\alpha 22 = \sum_{i=1}^{15} \left[ \frac{JBBi-(JRBi+JGBi+JBBi)/3}{QBBi-(QRBi+QGBi+QBBi)/3} \right] \div 15$$

$$B\alpha 33 = \sum_{i=1}^{15} \left[ \frac{JBBi-(JRBi+JGBi+JBBi)/3}{QBBi-(QRBi+QGBi+QBBi)/3} \right] \div 15$$

$$B\alpha 13 = \sum_{i=1}^{15} \left[ \frac{[JRBi-(JRBi+JGBi+JBBi)/3]-[QRBi-(QRBi+QGBi+QBBi)/3] \times B\alpha 11}{QBBi-(QRBi+QGBi+QBBi)/3} \right] \div 15$$

$$B\alpha 23 = \sum_{i=1}^{15} \left[ \frac{[JGBi-(JRBi+JGBi+JBBi)/3]-[QGBi-(QRBi+QGBi+QBBi)/3] \times B\alpha 22}{QBBi-(QRBi+QGBi+QBBi)/3} \right] \div 15$$

Bα11=0
Bα21=0
Bα12=0
Bα32=0

[Equation 5]

C Color Density Transformation Information

$$(\Delta IR \times y \leqq 0, \Delta IG \times y \geqq 0, \Delta IB \times y \geqq 0)$$

$$C\alpha 11 = \sum_{i=1}^{15} \left( \frac{JRCi - (JRCi + JGCi + JBCi)/3}{QRCi - (QRCi + QGCi + QBCi)/3} \right) \div 15$$

$$C\alpha 22 = \sum_{i=1}^{15} \left( \frac{JRCi - (JRCi + JGCi + JBCi)/3}{QRCi - (QRCi + QGCi + QBCi)/3} \right) \div 15$$

$$C\alpha 33 = \sum_{i=1}^{15} \left( \frac{JRCi - (JRCi + JGCi + JBCi)/3}{QRCi - (QRCi + QGCi + QBCi)/3} \right) \div 15$$

$$C\alpha 21 = \sum_{i=1}^{15} \left( \frac{[JGCi - (JRCi + JGCi + JBCi)/3] - [QGCi - (QRCi + QGCi + QBCi)/3] \times C\alpha 22}{QRCi - (QRCi + QGCi + QBCi)/3} \right) \div 15$$

$$C\alpha 31 = \sum_{i=1}^{15} \left( \frac{[JBCi - (JRCi + JGCi + JBCi)/3] - [QBCi - (QRCi + QGCi + QBCi)/3] \times C\alpha 33}{QRCi - (QRCi + QGCi + QBCi)/3} \right) \div 15$$

$C\alpha 12 = 0$
$C\alpha 32 = 0$
$C\alpha 13 = 0$
$C\alpha 23 = 0$

[Equation 6]

M Color Density Transformation Information

$$(\Delta IR \times y \geqq 0, \Delta IG \times y \leqq 0, \Delta IB \times y \geqq 0)$$

$$M\alpha 11 = \sum_{i=1}^{15} \left[ \frac{JGMi - (JRMi + JGMi + JBMi)/3}{QGMi - (QRMi + QGMi + QBMi)/3} \right] \div 15$$

$$M\alpha 22 = \sum_{i=1}^{15} \left[ \frac{JGMi - (JRMi + JGMi + JBMi)/3}{QGMi - (QRMi + QGMi + QBMi)/3} \right] \div 15$$

$$M\alpha 33 = \sum_{i=1}^{15} \left[ \frac{JGMi - (JRMi + JGMi + JBMi)/3}{QGMi - (QRMi + QGMi + QBMi)/3} \right] \div 15$$

$$M\alpha 12 = \sum_{i=1}^{15} \left[ \frac{[JRMi - (JRMi + JGMi + JBMi)/3] - [QRMi - (QRMi + QGMi + QBMi)/3] \times M\alpha 11}{QGMi - (QRMi + QGMi + QBMi)/3} \right] \div 15$$

$$M\alpha 32 = \sum_{i=1}^{15} \left[ \frac{[JBMi - (JRMi + JGMi + JBMi)/3] - [QBMi - (QRMi + QGMi + QBMi)/3] \times M\alpha 33}{QGMi - (QRMi + QGMi + QBMi)/3} \right] \div 15$$

$M\alpha 21 = 0$
$M\alpha 31 = 0$
$M\alpha 13 = 0$
$M\alpha 23 = 0$

[Equation 7]

Y Color Density Transformation Information

$$(\Delta IR \times y \geq 0, \Delta IG \times y \geq 0, \Delta IB \times y \leq 0)$$

$$Y\alpha 11 = \sum_{i=1}^{15} \left[ \frac{JBYi - (JRYi + JGYi + JBYi)/3}{QBYi - (QRYi + QGYi + QBYi)/3} \right] \div 15$$

$$Y\alpha 22 = \sum_{i=1}^{15} \left( \frac{JBYi-(JRYi+JGYi+JBYi)/3}{QBYi-(QRYi+QGYi+QBYi)/3} \right) \div 15$$

$$Y\alpha 33 = \sum_{i=1}^{15} \left( \frac{JBYi-(JRYi+JGYi+JBYi)/3}{QBYi-(QRYi+QGYi+QBYi)/3} \right) \div 15$$

$$Y\alpha 13 = \sum_{i=1}^{15} \left( \frac{[JRYi-(JRYi+JGYi+JBYi)/3]-[QRYi-(QRYi+QGYi+QBYi)/3] \times Y\alpha 11}{QBYi-(QRYi+QGYi+QBYi)/3} \right) \div 15$$

$$Y\alpha 23 = \sum_{i=1}^{15} \left( \frac{[JGYi-(JRYi+JGYi+JBYi)/3]-[QGYi-(QRYi+QGYi+QBYi)/3] \times Y\alpha 22}{QBYi-(QRYi+QGYi+QBYi)/3} \right) \div 15$$

$Y\alpha 11=0$
$Y\alpha 21=0$
$Y\alpha 12=0$
$Y\alpha 32=0$

Next, at S29 of Fig. 5, the calculating image processing unit 23 causes the transformation information storage medium 17 to store the coefficients $R\alpha 11$ to $R\alpha 33$, $G\alpha 11$ to $G\alpha 33$, $B\alpha 11$ to $B\alpha 33$, $C\alpha 11$ to $C\alpha 33$, $M\alpha 11$ to $M\alpha 33$ and $Y\alpha 11$ to $Y\alpha 33$ as the deviation density transformation informations and the neutral color density transformation informations calculated by the method to be described under the title [4. Creation of Neutral Color Density Transformation Information].

[4. Creation of Neutral Color Density Transformation Information]

The neutral color density transformation informations are determined by the following equation 8 from the color input image informations (JRNi, JGNi, JBNi: i = 1 to 15) in the primary colors R, G and B of the N image (Ni: i = 1 to 15) of each grade of the color chip 26, as obtained at S22 of Fig. 5 under the title of [3. Creation of Deviation Density Transformation Information], and from the color input image informations (QRNi, QGNi, QBNi: i = 1 to 15) in the primary colors R, G and B of the N image (Ni: i = 1 to 15) of each grade of the color chip 26, as obtained at S26 of Fig. 5:

[Equation 8]

$$\alpha NB = \sum_{i=1}^{15} \left( \frac{JBNi}{QBNi} \right) \div 15$$

$$\alpha NG = \sum_{i=1}^{15} \left( \frac{JGNi}{QGNi} \right) \div 15$$

$$\alpha NR = \sum_{i=1}^{15} \left( \frac{JRNi}{QRNi} \right) \div 15$$

In the embodiment thus far described, on the other hand, when the color output image information is to be obtained from the color input image information, the deviation density transformation information and the neutral color density transformation information, as read out from the storage medium, are used as they are. Despite of this description, however, it is arbitrary to correct and use the deviation density transformation information and the neutral color density transformation information, as read out from the storage medium. Especially when the fluctuations in the image forming unit and the pictorial hard copy material are serious as compared with the accuracy of the target color output image information, it is preferable to correct their influences.

In the above embodiments of the present invention, the color matching of the original image and the hard copy is realized. However, the present invention can also be applied to form an image of the coloring required by the user from the original image. In this case, it is easy to adjust each color of Y, M, C, B, G and R, to a desired coloring, because the coloring of each color can be adjusted independently.

According to the invention, it is possible to realize an image processing method, a storage medium and an image processing apparatus which can preferably reproduce an original image from the R, G and B color input image informations of the original image with a reduced amount of calculations and which exerts no influence, when a color is to be adjusted, upon another color containing the constituent of that color.

While the inventin has been particularly shown and described with reference to the preferred embodiments thereof, it will be understood by those skilled in the art that various changes in form and details may be made therein without departing from the sprit and scope of the invention as defined by the appended claims.

The present invention can be applied not only to reproduce the color of the original image, but also to form an image of the coloring desired by the user on the basis of the original image. According to the present invention, the coloring of each color of Y, M, C, B, G and R can be adjusted independently, so that the influence on the colors which are not required to adjust can be reduced, and it is easy to obtain an image of the coloring similar to the coloring required by the user.

## Claims

1. An image processing method comprising the step of determining an input neutral color density and R, G and B input deviation densities from R, G and B color input image informations obtained from an original image (11);

determining an output neutral color density from the determined input neutral color density on the basis of neutral color density transformation informations; determining an output deviation density from the determined input deviation density on the basis of deviation density transformation informations which are determined for each positive/negative combination of the R, G and B input deviation densities; and obtaining R, G and B color output image informations from the determined output neutral color density and the determined R, G and B output deviation densities.

2. The image processing method as claimed in claim 1, wherein the deviation density transformation informations are so decided as can determine the output deviation density from the input deviation density, when a color is to be adjusted, without influencing another color containing the constituent of that color.

3. A storage medium which is stored with a program for executing on a computer an image processing method comprising the step of determining an input neutral color density and R, G and B input deviation densities from R, G and B color input image informations obtained from an original image (11); determining an output neutral color density from the determined input neutral color density on the basis of neutral color density transformation informations; determining an output deviation density from the determined input deviation density on the basis of deviation density transformation informations which are determined for each positive/negative combination of the R, G and B input deviation densities; and obtaining R, G and B color output image informations from the determined output neutral color density and the determined R, G and B output deviation densities.

4. The storage medium as claimed in claim 3, wherein said deviation density transformation informations are so decided as can determine the output deviation density from the input deviation density, when a color is to be adjusted, without influencing another color containing the constituent of that color.

5. An image processing apparatus for obtaining R, G and B color output image informations from R, G and B color input image informations of an original image (11), comprising: input operation means (131) for determining an input neutral color density and R, G and B input deviation densities from the R, G and B color input image informations obtained from an original image (11); neutral color density operation means (132) for determining an output neutral color density from the input neutral color density determined by said input operation means (131), on the basis of neutral color density transformation informations; deviation density operation means (134) for determining R, G and B output deviation densities from the R, G and B input deviation density determined by said input operation means (131), on the basis of deviation density transformation informations which are determined for each positive/negative combination of the R, G and B input deviation densities; and output operation means (136) for obtaining the R, G and B color output image informations from the output neutral color densities determined by said neutral color density operation means (132) and the R, G and B output deviation densities determined by said deviation density operation means (134).

6. The image processing apparatus as claimed in claim 5, wherein the deviation density transformation informations are so decided as can determine the output deviation density from the input deviation density, when a desired color is to be adjusted, without influencing another color containing the constituent of the desired color.

EP 0 966 152 A2

FIG. 2

11 ORIGINAL IMAGE

15 PICTORIAL HARD COPY

# FIG. 3

26 COLOR CHIP

22

28

29

17

23

24

25 SECOND
COLOR CHIP

# FIG. 4

```
┌─────────────────┐
│      START      │
└─────────────────┘
         │
┌──────────────────────────────────────────┐
│ READ OUT DEVIATION DENSITY TRANSFORMATION │ S11
│ INFORMATION AND NEUTRAL COLOR DENSITY     │
│ TRANSFORMATION INFORMATION FROM           │
│ TRANSFORMATION INFORMATION STORAGE MEDIUM │
└──────────────────────────────────────────┘
         │
┌──────────────────────────────────────────┐
│ READ OUT ORIGINAL IMAGE BY IMAGE READING  │ S12
│ UNIT                                      │
└──────────────────────────────────────────┘
         │
┌──────────────────────────────────────────┐
│ INPUT COLOR INPUT IMAGE INFORMATIONS TO   │ S13
│ IMAGE PROCESSING UNIT                     │
└──────────────────────────────────────────┘
         │
┌──────────────────────────────────────────┐
│ DETERMINE INPUT NEUTRAL COLOR DENSITY AND │ S14
│ INPUT DEVIATION DENSITIES FROM COLOR      │
│ INPUT IMAGE INFORMATIONS                  │
└──────────────────────────────────────────┘
         │
┌──────────────────────────────────────────┐
│ DETERMINE OUTPUT NEUTRAL COLOR DENSITIES  │ S15
│ FROM INPUT NEUTRAL COLOR DENSITY          │
└──────────────────────────────────────────┘
         │
┌──────────────────────────────────────────┐
│ DETERMINE OUTPUT DEVIATION DENSITIES      │ S16
│ FROM INPUT DEVIATION DENSITIES            │
└──────────────────────────────────────────┘
         │
┌──────────────────────────────────────────┐
│ DETERMINE COLOR OUTPUT IMAGE FROM OUTPUT  │ S17
│ NEUTRAL COLOR DENSITIES AND OUTPUT        │
│ DEVIATION DENSITIES                       │
└──────────────────────────────────────────┘
         │
┌──────────────────────────────────────────┐
│ SEND COLOR OUTPUT IMAGE INFORMATIONS TO   │ S18
│ IMAGE FORMING UNIT                        │
└──────────────────────────────────────────┘
         │
┌──────────────────────────────────────────┐
│ FORM IMAGE BY IMAGE FORMING UNIT          │ S19
└──────────────────────────────────────────┘
         │
┌─────────────────┐
│       END       │
└─────────────────┘
```

# FIG. 5

```
        ┌─────────────────────┐
        │       START         │
        └─────────────────────┘
                  │
    ┌──────────────────────────────────┐
    │       PREPARE COLOR CHIP         │   S 2 1
    └──────────────────────────────────┘
                  │
    ┌──────────────────────────────────┐
    │ READ OUT COLOR CHIP BY CALCULATING IMAGE │   S 2 2
    │ READING UNIT                     │
    └──────────────────────────────────┘
                  │
    ┌──────────────────────────────────┐
    │ INPUT COLOR INPUT IMAGE INFORMATIONS TO │   S 2 3
    │ CALCULATING IMAGE PROCESSING UNIT │
    └──────────────────────────────────┘
                  │
    ┌──────────────────────────────────┐
    │ OBTAIN COLOR OUTPUT IMAGE INFORMATION │   S 2 4
    │ WITHOUT IMAGE PROCESSING         │
    └──────────────────────────────────┘
                  │
    ┌──────────────────────────────────┐
    │ PREPARE SECOND COLOR CHIP FROM COLOR │   S 2 5
    │ OUTPUT IMAGE INFORMATION BY CALCULATING │
    │ IMAGE FORMING UNIT               │
    └──────────────────────────────────┘
                  │
    ┌──────────────────────────────────┐
    │ READ OUT DENSITY OF SECOND COLOR CHIP BY │   S 2 6
    │ CALCULATING IMAGE READING UNIT   │
    └──────────────────────────────────┘
                  │
    ┌──────────────────────────────────┐
    │ INPUT DENSITIES OF SECOND COLOR CHIP TO │   S 2 7
    │ CALCULATING IMAGE PROCESSING UNIT │
    └──────────────────────────────────┘
                  │
    ┌──────────────────────────────────┐
    │ CALCULATE DEVIAION DENSITY        │   S 2 8
    │ TRANSFORMATION INFORMATIONS      │
    └──────────────────────────────────┘
                  │
    ┌──────────────────────────────────┐
    │ STORE IN TRANSFORMATION INFORMATION │   S 2 9
    │ STORAGE MEDIUM                   │
    └──────────────────────────────────┘
                  │
        ┌─────────────────────┐
        │        END          │
        └─────────────────────┘
```

# F I G . 6